Europäisches Patentamt

(19) European Patent Office

Office européen des brevets

(11) Numéro de publication: **0 209 169 B1**

(12) **FASCICULE DE BREVET EUROPEEN**

(45) Date de publication du fascicule du brevet: 03.01.90

(51) Int. Cl.⁴: **C08B 37/12**

(21) Numéro de dépôt: **86201022.0**

(22) Date de dépôt: **12.06.86**

(54) **Procédé d'obtention d'agar-agar à partir de jus d'extraction d'algues.**

(30) Priorité: **05.07.85 FR 8510687**

(43) Date de publication de la demande:
**21.01.87 Bulletin 87/4**

(45) Mention de la délivrance du brevet:
**03.01.90 Bulletin 90/1**

(84) Etats contractants désignés:
**DE FR GB IT SE**

(73) Titulaire: **INSTITUT NATIONAL POLYTECHNIQUE, Place des Hauts-Murats B.P. 354, F-31006 Toulouse Cédex(FR)**

(72) Inventeur: **Lebbar, Rachid, 42, rue Moulay Slimane Val Fleuri, Kenitra(MA)**
Inventeur: **Delmas, Michel, 30, Résidence des Amazones, F-31320 Auzeville Tolosane(FR)**
Inventeur: **Gaset, Antoine, 75, allée de Brienne, F-31000 Toulouse(FR)**

(74) Mandataire: **Barre, Philippe, Cabinet Barre-Gatti-Laforgue 95 rue des Amidonniers, F-31069 Toulouse Cédex(FR)**

(56) Documents cités:
FR-A- 959 098
FR-A- 2 296 648
GB-A- 1 079 764
US-A- 3 423 396

CHEMICAL ABSTRACTS,
vol. 90, no. 15, 9 avril 1979, page 340, résumé no. 118095w, Columbus, Ohio, US; S.N. STAVROV et al.: "Improvement in agaroid extraction by the preliminary conversion of phyllophora into sodium form", & IZV. VYSSH. UCHEBN. ZAVED., PISHCH. TEKHNOL. 1978, (6), 37-40 000
CHEMICAL ABSTRACTS,
vol. 74, no. 16, 19 avril 1971, page 71, résumé no. 77636x, Columbus, Ohio, US; D.T. IONESCU et al.: "Decolorization of agaroid solutions by using

(56) Documents cités: (suite)

macroporous anion exchangers", & KUNSTHARZ - IONENAUSTAUSCHER, PLENAR - DISKUSSIONSVORTR. SYMP. 1968 (Pub. 1970) 451-5 000
Kunstharz-Ionenaustauscher, Plenar- und Diskussionsvorträge (1970) = document corresponding to CA 74:77636x

Le dossier contient des informations techniques présentées postérieurement au dépôt de la demande et ne figurant pas dans le présent fascicule.

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un procédé d'obtention d'agar-agar à partir de jus d'extraction d'algues, notamment d'algues rouges (gelidium, gracilaria, pterocladia...). Elle vise en particulier à permettre de fabriquer de l'agar-agar de haute pureté susceptible d'être utilisé dans le secteur médical, pharmaceutique ou des biotechnologies.

L'agar-agar est un mélange de polysaccharides (agarose, agaropectine) de masses moléculaires élevées comprises entre 40 000 et 300 000 ; il est obtenu en fabriquant des jus d'extraction d'algues généralement par autoclavage, et en traitant ces jus qui comprennent environ 2 % d'agar-agar, afin d'extraire ce dernier.

Deux types essentiels de traitement des jus d'agar-agar existent actuellement selon la qualité du produit à obtenir et en particulier sa pureté chimique et sa contamination bactérienne. Pour fabriquer un produit de qualité courante utilisable notamment dans le secteur agroalimentaire, le traitement consiste à ajouter au jus d'extraction de l'hypochlorite de sodium ou du chlorite de sodium, à des concentrations pondérales de l'ordre de 1 %, puis à assurer directement soit un pressage mécanique du jus gélifié, soit une congélation/décongélation du jus gélifié, de façon à obtenir un gâteau d'agar-agar qui est ensuite séché. Toutefois, ce produit est légèrement coloré et contient des charges minérales, ce qui le rend totalement impropre à une utilisation dans des secteurs plus exigeants sur le plan de la qualité (médical, pharmaceutique, biotechnologie). L'avantage de ce procédé réside dans son coût réduit.

Pour obtenir un agar-agar de qualité supérieure, le traitement essentiellement utilisé à l'heure actuelle consiste à ajouter des additifs chimiques au jus d'extraction, qui en plus de la décoloration du jus, permettent de précipiter les cations lourds, $Ca^{++}$, $Fe^{+++}$, $Mg^{++}$, etc... présents dans le jus d'extraction, puis à procéder essentiellement à une congélation/décongélation à basse température (- 20° C) du jus d'extraction, de façon à précipiter un agar-agar de haute pureté. Cette opération est généralement répétée pour assurer une qualité constante. toutefois, le coût de ce procédé est extrêmement élevé en raison des dépenses énergétiques auxquelles il conduit, ce qui explique que le prix actuel de vent d'un agar-agar répondant aux normes de haute qualité est sensiblement le double d'un agar-agar de qualité courante.

De plus, dans certaines applications (applications scientifiques, analyses médicales et biochimiques), la faible charge en sulfate de la fraction agaropectine de l'agar-agar est gênante et, actuellement, cette charge est éliminée en précipitant l'agaropectine au moyen de complexants (éthylène glycol, chlorure de cétylpyridinium...). Toutefois, ces complexants sont des produits chers et font perdre toute la fraction agaropectine de l'agar-agar qui représente de 10 à 50 % en poids de l'ensemble.

Par ailleurs, il a été proposé dans un autre domaine technique de traiter des solutions d'agaroïde (polygalactane fortement sulfaté proche de la famille des carraghenannes) au moyen de résines échangeuses d'ions : "Chemical Abstracts, Vol. 74, 19 avril 1971, n° 16 page 71, abrégé n° 77636 Ionescu, D.T et al, Decolorization of agaroid solutions by using macroporous anion exchangers". Ce traitement consiste à mettre la solution d'agaroïde en présence de résine cationique conditionnée sous la forme ammonium, puis à mettre celle-ci en présence d'une résine anionique, enfin à terminer la décoloration sur charbon actif. Toutefois, ce procédé n'est pas applicable au problème posé de l'extraction de l'agar-agar de haute qualité, car l'ion ammonium qui est nécessaire dans le traitement de l'agaroïde (en raison du processus de récupération ultérieure du produit par précipitation à l'alcool, nécessitant la présence d'un sel d'ammonium soluble dans la phase hydro-organique) constitue une pollution incompatible avec la qualité de l'agar-agar recherchée. L'homme du métier est parfaitement conscient de cette incompatibilité, qui peut expliquer que le rapprochement des deux techniques n'ait pas été fait, alors que l'article sus-évoqué date de 1971. De plus, la qualité de la décoloration des agaroïdes est médiocre et celle-ci est affinée sur charbon actif, ce qui, dans le cas de l'agar-agar, ferait perdre tout intérêt économique à l'application de ce procédé. En outre, l'agaroïde, malgré une ressemblance terminologique, possède une structure chimique très polaire (présence de nombreux groupements sulfates) qui diffère très fortement de la structure chimique de l'agar-agar : l'agaroïde relève des techniques de traitement des phycocolloïdes fortement sulfatés, et l'agar-agar des techniques de traitement des polysaccharides neutres ou faiblement sulfatés, qui n'ont aucun rapport. Le transfert d'un procédé d'un secteur à l'autre est à priori non envisagé pour l'homme du métier. Par ailleurs, l'agaroïde est généralement précipité en phase finale par de l'alcool qui en assure une décontamination bactériologique, mais le coût de cette opération est très élevé et, dans le cas de l'agar-agar, rendrait le produit obtenu plus cher que les produits de haute pureté obtenus par décongélation/congélation.

La présente invention se propose de fournir un nouveau procédé d'obtention d'agar-agar à partir de jus d'extraction d'algues, permettant de produire un agar-agar de haute qualité compatible avec une utilisation dans le secteur médical, pharmaceutique ou les biotechnologies.

Un objectif de l'invention est de limiter les coûts de production à un niveau voisin de ceux impliqués à l'heure actuelle par la production d'agar-agar de qualité courante.

Un autre objectif est de produire un agar-agar désulfaté, sans perdre une fraction de l'agar-agar et sans augmentation sensible de coût.

Un objectif accessoire est de faciliter la récupération de sous-produits colorants contenus dans les jus d'extraction en vue d'une éventuelle valorisation.

A cet effet, le procédé d'obtention d'agar-agar conforme à l'invention consiste à combiner, dans l'ordre ci-dessous, les opérations suivantes :

(a) mettre un jus d'extraction d'algues contenant de l'agar-agar en présence d'une résine échangeuse d'ions, cationique, conditionnée sous la forme Na+, à une température supérieure au seuil de gélification dudit jus,

(b) mettre le jus d'extraction en présence d'une résine échangeuse d'ions, anionique, conditionnée sous la forme Cl− et/ou SO₄⁻⁻ à une température supérieure au seuil de gélification dudit jus,

(d) après les opérations (a) et (b), abaisser la température du jus au-dessous du seuil de gélification.

(e) et extraire ensuite l'agar-agar du gel obtenu.

Les expérimentations ont montré qu'un tel procédé fournit un agar-agar de haute qualité comparable à celui fourni par le procédé de congélation/décongélation évoqué précédemment.

Au cours de l'opération (a), les cations lourds retenus sur la molécule d'agar-agar (et spécialement le cation Ca++) sont échangés par le cation Na+ provenant de la résine cationique. Les essais ont montré que cet échange porte sur la quasi-totalité des cations lourds retenus par l'agar-agar (quantité de cations lourds résiduels pouvant descendre jusqu'à 10 p.p.m.) ; les cations lourds retenus par les sites anioniques de l'agar-agar sont donc fixés sélectivement par les sites anioniques de la résine et remplacés par des cations Na+ de cette résine : il est a priori surprenant qu'une résine échangeuse d'ions du type sus-évoqué permette un tel échange et surtout dans une telle proportion, alors que rien ne laisse prévoir pour ces deux types de polymère (résine, agar-agar) un échange de caractère très sélectif, lequel est actuellement difficilement explicable. Le caractère inattendu de ce phénomène est accru par le fait qu'il se déroule sans l'adjonction de charges minérales, notamment de soude (adjonction de charges qui serait incompatible avec l'obtention d'un agar-agar de haute qualité). Au surplus, aucune obturation des pores de la résine n'a été observée ni aucune dégradation de la molécule d'agar-agar (compte-tenu de la taille de la molécule d'agar-agar, ces résultats sont remarquables).

Au cours de l'opération (b), les colorants issus des algues (qui sont un facteur important de dépréciation de l'agar-agar) sont fixés sur la résine essentiellement par échange anionique avec relarguage d'ions Cl− ou SO₄⁻⁻ dans le jus ; cette fixation possède une efficacité remarquable et inattendue, provenant du mode de fixation sur site ionique autorisé par la nature des colorants du jus (dérivés pyrroliques, produits de la réaction de Maillard...).

Il est à noter qu'en opérant la déminéralisation (a) avant la décoloration (b), on évite la précipitation dans les pores de la résine anionique, de phosphate de calcium qui entraînerait des risques d'inactivation des sites lors de la décoloration (b).

Le gel obtenu au terme de l'opération de refroidissement (d) contient donc :

. les molécules d'agar-agar débarrassées des colorants et des cations lourds, (les sites anioniques de ces molécules portant un contre-ion Na+ qui assure la neutralité électrique),

. une phase aqueuse, débarrassée des colorants et des cations lourds et chargée en Na Cl et/ou Na₂SO₄ essentiellement formé à partir des ions entrés en solution à l'issue des opérations (a) et (b) (grâce aux choix combinés des conditionnements des résines utilisées).

L'opération d'extraction (e) a pour but d'éliminer l'essentiel de la phase aqueuse et de sa charge minérale Na Cl et permet d'obtenir un gâteau d'agar-agar, neutre et répondant aux normes de qualité dite bactériologique : le contre-ion Na+ retenu par les molécules d'agar-agar est une partie intégrante de la molécule d'agar-agar qui contribue à lui conférer ses propriétés bactériologiques (à la différence des cations lourds qui apportent une dureté préjudiciable à la qualité du produit).

Au surplus, le procédé de l'invention permet de récupérer facilement, sous forme native, les colorants fixés sur la résine anionique lors de la régénération de celle-ci ; cette récupération qui est autorisée par le mode de fixation par échange d'ions peut s'opérer de façon connue en soi en traitant la résine anionique par une solution d'acide chlorhydrique, traitement suivi après lavage à l'eau d'une percolation au moyen d'un solvant organique tel que éthanol ou acétone.

Par ailleurs, le procédé de l'invention se prête à la fabrication d'un agar-agar désulfaté à un coût minime par raport aux procédés existants. Il suffit alors de réaliser une opération complémentaire entre les opérations (b) et (d) sus-évoquées, consistant à mettre le jus d'extraction issu de l'opération (b) en présence d'une résine échangeuse d'ions, anionique, conditionnée sous le forme OH− à une température supérieure au seuil de gélification dudit jus.

Ainsi, contrairement aux procédés existants, la désulfatation s'opère sans addition d'un tiers corps (soude ou agent complexant) : les groupements sulfates en C₆ sont éliminés sur les sites de la résine et à la suite de cette réaction, un pont anhydrogalactose se forme avec le carbone C₃; ainsi la chaîne agar-agar de la fraction agaropectine reste dans le jus et n'est pas perdue.

Dans cette opération complémentaire (c), la température du jus d'extraction est maintenue entre 50° et 60° C, afin d'éviter une gélification prématurée du jus et une dégradation de la résine.

En outre, selon une autre caractéristique importante de l'invention dans une opération ultérieure (f), l'agar-agar en poudre extrait est mis en contact en phase gaz/solide avec un gaz vecteur chargé en ozone ; le gaz vecteur est de préférence chargé à une concentration comprise entre 2 et 20 milligrammes d'ozone par litre de gaz vecteur.

On obtient ainsi une remarquable décontamination bactérienne, sans être obligé d'ajouter un agent chimique en solution. Il est surprenant de constater que l'ozone détruit les micro-organismes sans aucune dégradation de la molécule d'agar-agar : la force de gel de l'agar-agar (qui caractérise sa qualité) ne subit aucune modification après le traitement à l'ozone.

Par ailleurs, selon un mode de mise en oeuvre préféré, la température de jus d'extraction est maintenue au cours des opérations (a) et (b) entre 60° C et 80°C, l'opération (d) consistant à laisser refroidir le jus jusqu'à la température ambiante. Dans le cas le plus fréquent d'un jus d'extraction d'algue obtenu par autoclavage (température voisine de 95°C), ce jus est traité après transfert en sortie d'autoclave à une température qui s'ajuste naturellement dans la plage sus-évoquée, et le maintien à cette température ne requiert qu'une très faible consommation énergétique

De préférence, les opérations (a), (b) et (c) sont réalisées en lit fixe, en amenant le jus d'extraction à percoler à travers des colonnes thermostatées de résine, suivant un processus bien connu en lui-même.

On obtient des résultats optimisés:
. d'une part, en utilisant à l'opération (a) une résine cationique fonctionnalisée par des groupes sulfoniques,
. d'autre part, en utilisant à l'opération (b) ou à l'opération (c) une résine anionique fonctionnalisée par des groupes ammonium quaternaire,

Le squelette de ces résines peut notamment être du type polystyrénique ou acrylique.

Selon un mode de réalisation préféré conduisant à un coût de mise en œuvre très réduit, l'opération d'extraction (e) peut consister à assurer un pressage du gel à travers un filtre de façon à retenir un gâteau d'agar-agar; ce pressage peut être réalisé par une mise en œuvre classique, en particulier à travers un filtre en tissu serré sous une pression comprise entre 300 et 600 bars.

Il également possible d'assurer l'extraction (e) par une opération connue en soi de congélation-décongélation du gel de façon à précipiter l'agar-agar. Cette opération peut en particulier être réalisée de façon traditionnelle par l'immersion de godets, contenant le gel d'agar-agar, dans des bassins de solutions de saumure, refroidis ensuite à −20°C. Cette mise en œuvre sera choisie dans les contrées où l'énergie électrique est très bon marché. Il est à noter qu'il n'est pas nécessaire de la répéter pour obtenir un agar-agar de très haute qualité, de sorte que le coût du procédé est sensiblement réduit même dans ce mode de mise en œuvre, par rapport au procédé traditionnel de fabrication d'agar-agar de qualité biologique.

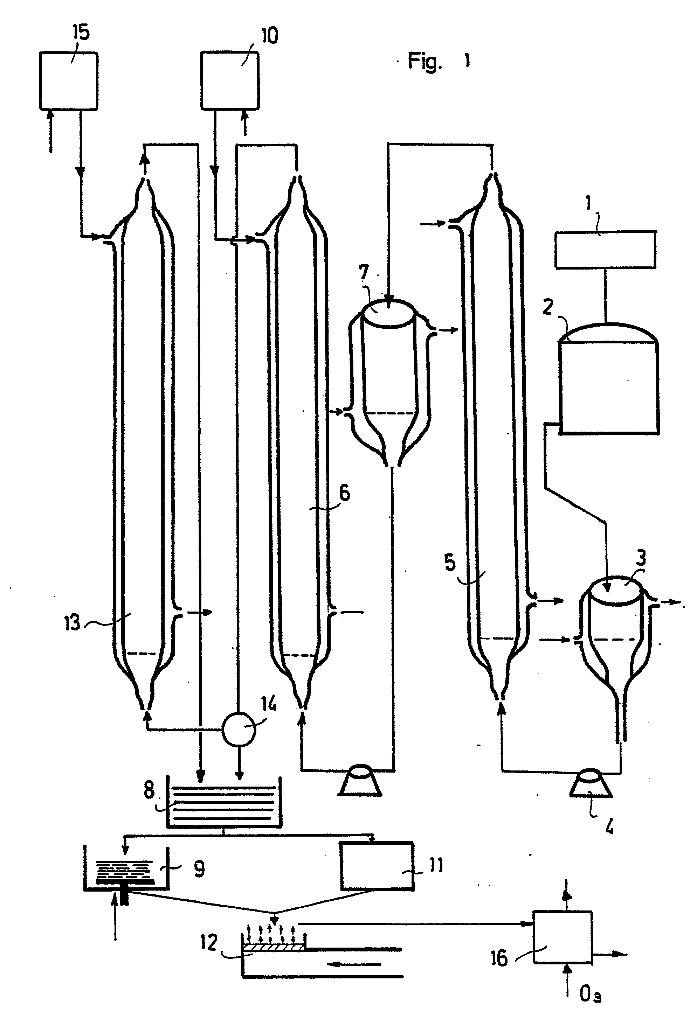

La description qui suit présente en référence à la figure unique du dessin annexé le schéma d'une installation pour la mise en œuvre du procédé et des exemples d'application réalisés dans cette installation.

Ces exemples ont été mis en œuvre par le processus expérimental général décrit ci-après : 1 kg d'algues sèches est lavé à l'eau, puis trempé dans un bassin 1 à circulation d'eau pendant 12 heures. Les algues sont ensuite extraites au moyen de 15 litres d'eau dans un autoclave 2 sous une pression de 1,8 bar et une température de 120° C pendant 4 heures. Le jus recueilli est filtré à travers un filtre 3 thermostaté à 80° C, de porosité 0,0. La circulation est assurée dans l'installation par un jeu de pompes telles que 4. Le jus est ensuite percolé en ascendant à travers deux colonnes 5 et 6 thermostatées à température réglable de 60° C à 80° C, d'un diamètre de 30 mm et d'une hauteur de 1 000 mm. La première colonne contient 0,7 litre de résine cationique conditionnée sous forme Na$^+$ et la deuxième le même volume d'une résine anionique conditionnée sous forme

Cl$^-$ ou SO$_4^{--}$. Un régulateur de débit 7 est intercalé entre les deux colonnes cependant qu'un étage 10 de régulation de température assure le maintien du système à température constante.

De plus, une troisième colonne 13 analogue aux deux premières est disposée en série avec celles-ci, par l'entremise d'une vanne 14 permettant d'amener le jus, soit à traverser ladite colonne 13, soit à se déverser directement dans un bac de gélification 8. La colonne 13 est thermostatée de façon analogue aux deux premières par un étage de régulation 15, à une température comprise entre 50 et 60° C. Après passage à travers celle-ci, le jus est délivré vers le bac 8. Cette colonne 13 contient 0,7 litre de résine anionique conditionnée sous forme OH$^-$.

Le jus, après passage à travers les colonnes de résine, est gélifié dans le bac 8 à température ambiante pendant huit heures. Le gel obtenu subit soit un pressage mécanique dans une presse verticale 9 développant une pression comprise entre 300 bars et 600 bars pendant huit heures, soit une congélation à - 20° C pendant 48 heures suivie d'une décongélation à température ambiante dans un bassin 11. Ces deux processus permettent d'éliminer entre 70 et 80 % d'eau contenue initialement. Le gâteau d'agar-agar déshydraté est séché par un courant d'air chaud à 70° C jusqu'à poids constant dans une enceinte 12.

La poudre extraite est ensuite envoyée dans un réacteur agité 16 qui reçoit un flux d'air chargé d'ozone à concentration égale à 5 milligrammes d'ozone par litre d'air. Il est possible de travailler en lit fluidisé.

Les analyses effectuées à différents stades du procédé sont :
- la mesure de la densité optique à 340 nm dans une cuve de 1 cm thermostatée à 80° C (cette mesure est effectuée directement sur le jus d'extraction et sur des solutions d'agar-agar à 1,5 % quand il s'agit d'agar-agar en poudre),
- le dosage des chlorures par titrimétrie par AgNO3,
- le dosage du calcium par titrimétrie par l'"EDTA" quand il s'agit de solution concentrée ou par spectrophotométrie d'absorption atomique pour des faibles concentrations,
- le dosage des sulfate et soufre par gravimétrie (BaCl$_2$) et micro-analyse,
- le dosage du sodium par spectroscopie d'adsorption atomique,
- la mesure de la force de gel par l'appareil NIKAN (elle se fait sur des gels vieillis pendant 12 h, préparés à partir de 500 ml d'une solution de 1,5 % en concentration quand il s'agit de l'agar-agar en poudre et directement sur des échantillons de 500 ml quand il s'agit des jus d'extraction),
- le dosage du fer par colorimétrie à la phénantroline pour Fe$^{2+}$ et par les thiocyanates pour Fe$^{3+}$,
- les traces des métaux lourds visualisées par analyse "EDAX" (cette analyse permet aussi de recenser tous les éléments présents dans l'agar-agar en poudre ; cette analyse se fait sur les cendres de la poudre d'agar-agar),
- le dosage du D-galactose par la méthode colorimétrique à l'anthrone, et le dosage de l'anhydro 3,6 galactose par la méthode colorimétrique au résorcinol,

- le dosage de l'azote résiduel par analyse élémentaire,
- une numérotation des germes totaux pour mesurer la contamination bactérienne.

EXAMPLE 1

1 kg d'algues rouges Gelidium Sesquipedale subit l'extraction décrite ci-dessus sans passer dans la colonne 13. L'étuvage est réalisé à l'eau de ville contenant 1,5 meq/l de Cl⁻ (milliéquivalent par litre), 2,5 meq/l de Ca⁺⁺ et 3 meq/l de SO₄⁻⁻. Le jus recueilli a une densité optique à 340 nm de 4,5 et une minéralité de 2 meq/l de Cl⁻, 8 meq/l de Ca⁺⁺ et de 5,2 meq/l de SO₄⁻⁻. Sa force de gel est de 910 g/cm².

La première colonne contient une résine cationique de type gel "AMBERLITE 120", de squelette polystyrénique ayant un groupe sulfonique comme groupe fonctionnel et le cation Na⁺ comme contrecation.

La deuxième colonne contient une résine anionique macroporeuse "DUOLITE A172", de squelette acrylique ayant un ammonium quaternaire comme groupe fonctionnel et l'anion Cl⁻ comme contre-anion.

Les deux colonnes sont thermostatées à 80° C.

Le passage du jus à travers la première colonne cationique avec un débit de 3,1 volumes de jus/volume de résine/heure donne un jus ayant une densité optique à 340 nm de 4,2 et une minéralité de 2 meq/l de Cl⁻ sensiblement nulle pour le Ca⁺⁺ et de 5,2 meq/l de SO₄⁻⁻; sa force de gel est de 900 g/cm².

Le passage du jus d'extraction dans la deuxième colonne avec un débit de 6 volumes de jus / volume de résine / heure permet d'obtenir un jus décoloré d'une densité optique à 340 nm de 0,6 et d'une minéralité de 12 meq/l de Cl⁻, 0 meq/l de Ca⁺⁺ et de 0,2 meq/l de SO₄⁻⁻; sa force de gel est de 900 g/cm².

Le jus récupéré est pressé, puis séché. Il donne un rendement en agar-agar de 21 % par rapport à l'algue sèche de départ. Cette poudre contient 0,7 % en Cl⁻, 0,74 % en Na⁺, 2,5 % en SO₄⁻⁻ et 40 ppm en Ca⁺⁺. L'analyse "EDAX" montre l'existence de trace de Si, mais par contre aucune trace de Fe, Mg, Pb, K, P, Al et Zn. Les cendres totales représentent 3,5 % du poids de départ. Le pourcentage de galactose est de 48% et celui d'anhydro 3,6 galactose est de 43 %.

La force de gel de l'agar-agar produit en fin de chaîne pour une concentration de 1,5 %, est de 850 g/cm². Sa densité optique à 340 nm est de 0,5. Sa concentration en azote est de 0,1 %. La force de gel ne varie pas en amont et en aval du traitement à l'ozone. Ce traitement ramène le nombre de germes totaux par gramme d'agar-agar de 6 000 à 450.

EXAMPLE 2

1 kg d'algues rouges Gelidium Sesquipédale subit l'extraction décrite ci-dessous. Le jus recueilli a une densité optique à 340 nm de 4,1, un pH de 7,3 et une minéralité de 2,2 meq/l de Cl⁻, 7,6 meq/l de Ca⁺⁺ et de 6,4 meq/l de SO₄⁻⁻. Sa force de gel est de 870 g/cm².

La première colonne (5) contient une résine cationique macroporeuse "AMBERLITE IR 200", de squelette polystyrénique ayant un groupe sufonique comme groupe fonctionnel et le cation Na⁺ comme contre-anion.

La deuxième colonne (6) contient une résine anionique macroporeuse "DUOLITE A171", de squelette polystyrénique ayant un ammonium quaternaire comme groupe fonctionnel et l'anion Cl⁻ comme contre-anion. Les deux colonnes sont thermostatées à 70° C.

La troisième colonne (13) contient une résine anionique macroporeuse "DUOLITE A172", de squelette acrylique ayant un ammonium quaternaire comme groupe fonctionnel et l'anion OH⁻ comme contre-anion. Cette colonne est thermostatée à 50° C.

Le passage du jus d'extraction dans la première colonne cationique avec un débit de 6 volumes de jus/volume de résine/heure donne un jus ayant une densité optique à 340 nm de 3,9, un pH de 7,3 et une minéralité de 2,2 meq/l de Cl⁻, 0,1 meq/l de Ca⁺⁺ et 6,4 meq/l de SO₄⁻⁻. Sa force de gel est de 850 g/cm².

Le passage du jus d'extraction à travers la deuxième colonne anionique avec un débit de 6 volumes de jus/volume de résine/heure donne un jus ayant une densité optique de 0,7, un pH de 7,1 et une minéralité de 13 meq/l de Cl⁻, 0,1 meq/l de Ca⁺⁺ et 0,9 meq/l de SO₄⁻⁻ ; sa force de gel est de 850 g/cm².

Le jus est refroidi jusqu'à une température de 50° C. Le passage du jus d'extraction à travers la troisième colonne anionique avec un débit de 5 volumes de jus/volume de résine/heure, donne un jus ayant une densité optique à 3,40 nm de 0,4, un pH de 8,8 et une minéralité de 0,5 meq/l de Cl⁻, 0,05 meq/l de Ca⁺⁺ et 0,1 meq/l de SO₄⁻⁻ ; sa force de gel est de 820 g/cm².

Le jus récupéré est congelé, puis séché. Il donne un rendement pondéral en agar-agar de 19 % par rapport au poids d'algues sèches de départ. Cette poudre contient 0,1 % de Cl⁻, 0,7 % de Na⁺, 0,5 % de SO₄⁻⁻ et 70 ppm de Ca ⁺⁺. L'analyse "EDAX" montre l'existence de trace de Si, mains par contre aucune trace des éléments lourds : Fe, Mg, Pb, P, Al et Zn. Le pourcentage en cendres totales est de 1,3 %.

Le pourcentage de galactose est de 47 % et celui de l'anhydro 3,6 galactose est de 49,5 %. La force de gel de l'agar-agar produit en fin de chaîne pour une concentration de 1,5 % est de 730 g/cm². Sa densité optique à 340 nm est de 0,2. Sa concentration en azote est de 0,05 %. La force de gel ne varie pas en amont et en aval du traitement à l'ozone. Ce traitement ramène le nombre de germes totaux par gramme d'agar-agar de 10 000 à 400.

**Revendications**

1/ - Procédé d'obtention d'agar-agar à partir de jus d'extraction d'algues, caractérisé en ce qu'il consiste à combiner dans l'ordre ci-dessous les opérations suivantes :
    (a) mettre le jus d'extraction en présence d'une résine échangeuse d'ions, cationique, conditionnée sous la forme Na⁺, à une température supérieure au seuil de gélification dudit jus,

(b) mettre le jus d'extraction en présence d'une résine échangeuse d'ions, anionique, conditionnée sous la forme Cl⁻ et/ou SO₄⁻⁻, à une température supérieure au seuil de gélification dudit jus,

(d) après les opérations (a) et (b), abaisser la température du jus au-dessous du seuil de gélification,

(e) et extraire ensuite l'agar-agar du gel obtenu.

2/ - Procédé selon la revendication 1, caractérisé en ce que, entre l'opération (b) et l'opération (d), on réalise une opération complémentaire (c) consistant à mettre le jus d'extraction issu de l'opération (b) en présence d'une résine échangeuse d'ions, anionique, conditionnée sous la forme OH⁻ à une température supérieure au seuil de gélification dudit jus.

3/ - Procédé selon la revendication 1, caractérisé en ce que, dans une opération ultérieure (f), l'agar-agar en poudre extrait est mis en contact en phase gaz/solide avec un gaz vecteur chargé en ozone.

4/ - Procédé selon la revendication 2, caractérisé en ce que l'opération (f) est mise en oeuvre en chargeant le gaz vecteur par de l'ozone à une concentration comprise entre 2 et 20 milligrammes d'ozone par litre de gaz vecteur.

5/ - Procédé selon l'une des revendications 1, 2, 3 ou 4, caractérisé en ce que, au cours des opérations (a) et (b), la température du jus d'extraction est maintenue entre 60° C et 80° C, l'opération (d) consistant à laisser refroidir le jus jusqu'à la température ambiante.

6/ - Procédé selon la revendication 2, caractérisé en ce que, au cours de l'opération complémentaire (c), la température du jus d'extraction est maintenue entre 50° C et 60° C.

7/ - Procédé selon l'une des revendications 1, 2, 3, 4, 5 ou 6, dans lequel l'opération (a), l'opération (b) et, le cas échéant, l'opération (c) consistent à amener le jus d'extraction à percoler à travers des lits fixes thermostatés de résines.

8/ - Procédé selon l'une des revendications 1 2, 3, 4, 5, 6 ou 7, caractérisé en ce que la résine anionique utilisée à l'opération (b) ou le cas échéant (c) est une résine fonctionnalisée par des groupes ammonium quaternaire.

9/ - Procédé selon l'une des revendications 1, 2, 3, 4, 5, 6, 7 ou 8, caractérisé en ce que la résine cationique utilisée à l'opération (a) est une résine fonctionnalisée par des groupes sulfoniques.

10/ - Procédé selon l'une des revendications 8 ou 9, dans lequel la résine cationique utilisée à l'opération (b) ou, le cas échéant, à l'opération (c) et la résine anionique utilisée à l'opération (a) possèdent un squelette polystyrénique ou acrylique.

11/ - Procédé selon l'une des revendications 1, 2, 3, 4, 5, 6, 7, 8, 9 ou 10, dans lequel l'extraction (e) consiste à assurer un pressage du gel à travers un filtre de façon à retenir un gâteau d'agar-agar.

12/ - Procédé selon la revendication 11, dans lequel le pressage (e) est effectué à travers un filtre sous une pression comprise entre 300 et 600 bars.

13/ - Procédé selon les revendications 1, 2, 3, 4, 5, 6, 7, 8, 9 ou 10, dans lequel l'extraction (e) consiste à effectuer une congélation/décongélation du gel de façon à précipiter l'agar-agar.

**Claims**

1. Process for obtaining agar-agar from the juices extracted from seaweeds, characterised in that it consists in combining, in the order given below, the following operations:

(a) putting the extraction juice into contact with a cationic ion exchange resin conditioned in the form Na⁺, at a temperature higher than the gel-forming threshold of said juice,

(b) putting the extraction juice into contact with an anionic ion exchange resin, conditioned in the form C1⁻ and/or SO₄⁻⁻, at a temperature higher than the gel-forming threshold of said juice,

(d) lowering, after operations (a) and (b), the temperature of the juice below the gel-forming threshold,

(e) then extracting the agar-agar from the gel obtained.

2. Process according to claim 1, characterised in that between operation (b) and operation (d) a complementary operation (c) is carried out, consisting in putting the extraction juice resulting from operation (b) into contact with an anionic ion exchange resin conditioned in the form OH⁻ at a temperature higher than the gel-forming threshold of said juice.

3. Process according to claim 1, characterised in that, in a further operation (f), the agar-agar in the form of a powder extract is brought into contact in the gaseous/solid phase with an ozone-charged carrier gas.

4. Process according to claim 2, characterised in that operation (f) is carried out by charging the carrier gas with ozone at a concentration between 2 and 20 milligrammes of ozone per litre of carrier gas.

5. Process according to one of claims 1, 2, 3 or 4, characterised in that, in the course of operations (a) and (b), the temperature of the extraction juice is maintained between 60°C and 80°C, operation (d) consisting in allowing the juice to cool down to the ambient temperature.

6. Process according to claim 2, characterised in that, in the course of complementary operation (c), the temperature of the extraction juice is maintained between 50°C and 60°C.

7. Process according to one of claims 1, 2, 3, 4, 5 or 6, in which operation (a), operation (b) and, if required, operation (c) consist in causing the extraction juice to percolate through thermostatically controlled fixed resin beds.

8. Process according to one of claims 1, 2, 3, 4, 5, 6 or 7, characterised in that the anionic resin used in operation (b) or, if required, (c) is a resin made functional by groups of quarternary ammonium.

9. Process according to one of claims 1, 2, 3, 4, 5, 6, 7 or 8, characterised in that the cationic resin used in operation (a) is a resin made functional by sulfonic groups.

10. Process according to one of claims 8 or 9, in which the cationic resin used in operation (b) or, if required, in operation (c) and the anionic resin used in operation (a) have a polystyrene or acrylic skeletal structure.

11. Process according to one of claims 1, 2, 3, 4, 5, 6, 7, 8, 9 or 10, in which the extraction (e) consists in ensuring that the gel is pressed through a filter so as to retain an agar-agar cake.

12. Process according to claim 11, in which the pressing operation (e) is effected through a filter subject to a pressure between 300 and 600 bars.

13. Process according to claims 1, 2, 3, 4, 5, 6, 7, 8, 9 or 10, in which the extraction (e) consists in effecting freezing/defrosting of the gel so as to precipitate the agar-agar.

## Patentansprüche

1. Verfahren zur Gewinnung von Agar-Agar aus Saft extrahiert von Algen, dadurch gekennzeichnet, daß es darin besteht, die folgenden Operationen in der nachstehenden Reihenfolge zu verbinden:

(a) Bringen des Extraktionssaftes in Gegenwart eines kationischen Ionenaustauschharzes, das in der Form $Na^+$ konditioniert ist, und zwar bei einer Temperatur oberhalb der Gelierschwelle des besagten Saftes,

(b) Bringen des Extraktionssaftes in Gegenwart eines anionischen Ionenaustauschharzes, das in der Form $C1^-$ und/oder $SO_4^{--}$ konditioniert ist, und zwar bei einer Temperatur oberhalb der Gelierschwelle des besagten Saftes,

(d) nach den Operationen (a) und (b) Senken der Temperatur des Saftes unterhalb der Gelierschwelle

(e) und danach Extrahieren des Agar-Agars aus dem gewonnenen Gel.

2. Verfahren nach Anspruch 1, dadurch gekennzeichnet, daß zwischen Operation (b) und Operation (d) eine komplementäre Operation (c) durchgeführt wird, die darin besteht, daß man den in Operation (b) anfallenden Extraktionssaft in Gegenwart eines anionischen Ionenaustauschharzes bringt, das in der Form $OH^-$ konditioniert ist, und zwar bei einer Temperatur oberhalb der Gelierschwelle des besagten Saftes.

3. Verfahren nach Anspruch 1, dadurch gekennzeichnet, daß in einer weiteren Operation (f) das ein puderförmiges Extrakt bildende Agar-Agar in der gasförmigen/festen Phase mit einem mit Ozon geladenen Trägergas in Kontakt gebracht wird.

4. Verfahren nach Anspruch 2, dadurch gekennzeichnet, daß Operation (f) durch Beschicken des Trägergases mit Ozon durchgeführt wird, und zwar bei einer Konzentration zwischen 2 und 20 Milligramm Ozon je Liter Trägergas.

5. Verfahren nach einem der Ansprüche 1, 2, 3 oder 4, dadurch gekennzeichnet, daß im Laufe der Operationen (a) und (b) die Temperatur des Extraktionssaftes zwischen 60°C und 80°C gehalten wird, wobei Operation (d) darin besteht, daß man den Saft bis auf die Umgebungstemperatur abkühlen läßt.

6. Verfahren nach Anspruch 2, dadurch gekennzeichnet, daß im Laufe der komplementären Operation (c) die Temperatur des Extraktionssaftes zwischen 50°C und 60°C gehalten wird.

7. Verfahren nach einem der Ansprüche 1, 2, 3, 4, 5 oder 6, bei dem Operation (a), Operation (b) und falls erforderlich Operation (c) darin bestehen, daß der Extraktionssaft zum Perkolieren zu thermostatisch geregelten festen Harzbetten veranlaßt wird.

8. Verfahren nach einem der Ansprüche 1, 2, 3, 4, 5, 6 oder 7, dadurch gekennzeichnet, daß das in Operation (b) oder falls erforderlich (c) verwendete anionische Harz ein durch Gruppen von quartärem Ammonium wirksam gemachtes Harz ist.

9. Verfahren nach einem der Ansprüche 1, 2, 3, 4, 5, 6, 7 oder 8, dadurch gekennzeichnet, daß das in Operation (a) verwendete kationische Harz ein durch Sulfongruppen wirksam gemachtes Harz ist.

10. Verfahren nach einem der Ansprüche 8 oder 9, bei dem das in Operation (b) oder falls erforderlich Operation (c) verwendete kationische Harz und das in Operation (a) verwendete anionische Harz eine polystyrol- oder acrylförmige Grundstruktur aufweisen.

11. Verfahren nach einem der Ansprüche 1, 2, 3, 4, 5, 6, 7, 8, 9 oder 10, bei dem die Extraktion (e) darin besteht, daß ein durch Pressen des Gels durch ein Filter gewährleistet wird, um einen Agar-Agar-Kuchen zurückzubehalten.

12. Verfahren nach Anspruch 11, bei dem die Preßoperation (e) durch ein Filter hindurch unter einem Druck zwischen 300 und 600 bar bewirkt wird.

13. Verfahren nach den Ansprüchen 1, 2, 3, 4, 5, 6, 7, 8, 9 oder 10, bei dem die Extraktion (e) darin besteht, daß man Gel gefriert/auftaut, um Niederschlag des Agar-Agars zu bewirken.

Fig. 1